# EUROPEAN PATENT SPECIFICATION

(11) **EP 3 988 912 B1**
(45) Date of publication and mention of the grant of the patent: **25.11.2026**
(21) Application number: 20872845.1
(22) Date of filing: 17.09.2020
(51) Int. Cl.: G01K 7/22, H01C 1/028, H01C 1/142, H01C 1/148, H01C 7/02, H01C 7/04, H01C 17/02, H01C 17/28

(54) **TEMPERATURE SENSOR ELEMENT AND METHOD FOR MANUFACTURING A TEMPERATURE SENSOR ELEMENT**
TEMPERATURSENSORELEMENT UND VERFAHREN ZUR HERSTELLUNG EINES TEMPERATURSENSORELEMENTS
ÉLÉMENT DE CAPTEUR DE TEMPÉRATURE ET PROCÉDÉ PERMETTANT DE FABRIQUER UN ÉLÉMENT DE CAPTEUR DE TEMPÉRATURE

(30) Priority: 03.10.2019 JP 2019182795
(43) Date of publication of application: 27.04.2022
(73) Proprietor: Shibaura Electronics Co., Ltd., Saitama-shi, Saitama 338-0001 (JP)
(72) Inventor: TAKEUCHI, Akitaka, Saitama-shi Saitama 338-0001 (JP); NIIZEKI, Naohiro, Saitama-shi Saitama 338-0001 (JP)
(74) Representative: Henkel & Partner mbB
(86) International application number: PCT/JP2020/035269
(87) International publication number: WO 2021/065541

(56) References cited:
- CN-B- 103 398 795
- JP-A- 2006 054 258
- JP-A- 2009 115 789
- JP-A- 2012 052 959
- JP-A- 2012 052 959
- JP-A- S60 136 202
- JP-B2- 4 990 256

## Description

### Technical Field

The present invention relates to a temperature sensor element including a thermistor as a heat sensitive body, and particularly to a temperature sensor element that exhibits a low rate of change in the electrical resistance value in a high-temperature reducing atmosphere.

### Background Art

Conventionally, temperature sensors using a thermistor of which the electrical resistance value (hereinafter simply "resistance value") changes with temperature as a heat sensitive body have been widely used. The characteristics of a thermistor are generally represented by the resistance value and a temperature coefficient of resistance (dependence of the resistance value on temperature).

Such a temperature sensor includes, as a minimum unit, a temperature sensor element that includes a thermistor as a heat sensitive body, electrodes formed on surfaces of the thermistor, and lead wires joined to the electrodes. Usually, this temperature sensor element is not used with the thermistor exposed to outside air, and the thermistor is covered with some kind of protective layer. As one example, a protective layer made of glass is provided to protect the thermistor from an environment where the temperature sensor is used. For example, when measuring a temperature in a reducing atmosphere, if the thermistor that is an oxide sintered body is reduced, the electrical characteristics of the thermistor change. Then, after the reduction, a temperature measurement result different from that before the reduction is output even when the temperature is the same.

Patent Literature 1 and Patent Literature 2 propose solutions to a problem with this protective layer made of glass. As there is a difference in the coefficient of linear expansion between the thermistor and the lead wires, the coefficient of linear expansion of the glass forming the protective layer cannot be matched with both the coefficient of linear expansion of the thermistor and the coefficient of linear expansion of the lead wires. If there is a difference between the coefficient of linear expansion of the glass and the coefficient of linear expansion of the thermistor, the thermistor is subjected to thermal stress, so that the electrical characteristics of the thermistor element, typically the resistance value changes, which may make correct temperature measurement difficult.

Therefore, Patent Literature 1 and Patent Literature 2 propose temperature sensors having an inner protective layer that seals the thermistor along with portions of the lead wires, and an outer protective layer. As the inner protective layer, one obtained by adding thermistor powder to crystallized glass is illustrated. As the outer protective layer, one obtained by adding yttrium oxide (Y₂O₃) to crystallized glass is illustrated. Patent Literature 3 discloses a moisture proof encapsulation for a thermistor. An inner protective layer of silica gel is encapsulated and cured in an outer protective layer of epoxy resin.

### Citation List

### Patent Literature

Patent Literature 1: JP 4990256 B2
Patent Literature 2: JP 5049879 B2 Patent Literature 3: CN 103 398 795 B

### Summary of Invention

### Technical Problem

According to the proposals of Patent Literature 1 and Patent Literature 2, temperature sensors that exhibit excellent thermal responsiveness and lead wire sealing performance even in a reducing atmosphere of a high temperature, for example, 1000°C or higher, are provided.

However, it is required to be able to measure temperature with high accuracy for a longer period of time even in such a harsh environment. Therefore, the present invention aims to provide a temperature sensor element that exhibits a stable electrical resistance value even when continuously used in a high-temperature reducing atmosphere.

### Solution to Problem

A temperature sensor element of the present invention includes: a heat sensitive body including a thermistor sintered body of which the electrical characteristics change with temperature; a pair of lead wires connected to the heat sensitive body through electrodes; and a protective layer covering the heat sensitive body.

The protective layer in the present invention has an inner protective layer covering the heat sensitive body and an outer protective layer covering the outer side of the inner protective layer.

The inner protective layer in the present invention is formed of an aggregate of particles that are chemically stable with respect to the thermistor sintered body and made of non-metal.

In the present invention, it is preferable that the filling rate of the particles in the aggregate of the inner protective layer be 88% or less.

In the present invention, it is preferable that the aggregate of the inner protective layer include one or two or more of oxide particles, carbide particles, nitride particles, and boride particles.

In the present invention, it is preferable that the aggregate of the inner protective layer include thermistor particles having the same composition as the thermistor sintered body.

The present invention provides a manufacturing method of a temperature sensor element including a heat sensitive body including a thermistor sintered body of which the electrical characteristics change with temperature, a pair of lead wires connected to the heat sensitive body through electrodes, and a protective layer covering the heat sensitive body.

The manufacturing method of a temperature sensor element of the present invention includes a first step of providing an inner protective layer that covers the heat sensitive body, and a second step of providing an outer protective layer that covers the outer side of the inner protective layer.

In the first step in the present invention, the inner protective layer formed of an aggregate of particles that are chemically stable with respect to the thermistor sintered body and made of non-metal is provided.

### Advantageous Effects of Invention

According to the temperature sensor element of the present invention, the inner protective layer is formed of an aggregate of particles that are chemically stable with respect to the thermistor sintered body and made of non-metal, so that a stable electrical resistance value can be obtained even when the temperature sensor element is used in a harsh high-temperature environment.

### Brief Description of Drawings

FIG. 1 is a sectional view showing a simplified configuration of a temperature sensor element according to an embodiment.
FIG. 2A shows a photograph of the microstructure of an inner protective layer according to the embodiment that does not contain glass, and FIG. 2B shows a photograph of the microstructure of an inner protective layer that contains glass.
FIGS. 3A and 3B are views each illustrating a thermal stress bearing effect of the inner protective layer according to the embodiment.
FIG. 4 is a flowchart showing a simplified manufacturing process of the temperature sensor element according to the embodiment.
FIGS. 5A to 5C are views showing a simplified manufacturing procedure of the temperature sensor element according to the embodiment.
FIGS. 6A to 6C are views showing the procedure of forming the inner protective layer according to the embodiment.

### Description of Embodiment

A temperature sensor element 1 according to one embodiment of the present invention will be described with reference to the drawings.

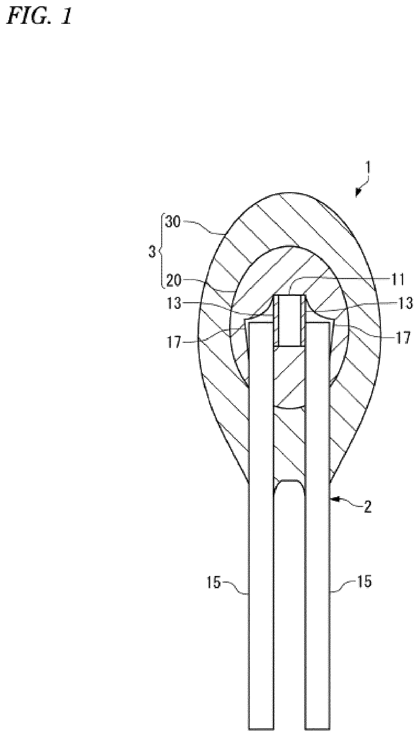

As shown in FIG. 1, the temperature sensor element 1 according to the embodiment includes an element main body 2 and a protective layer 3. The element main body 2 includes: a heat sensitive body 11 of which the electrical characteristics, for example, the electrical resistance value changes with temperature; a pair of electrodes 13, 13 formed on opposite side surfaces of the heat sensitive body 11; a pair of lead wires 15, 15 connected to the respective electrodes 13, 13; and a pair of connection electrodes 17, 17 connecting the electrodes 13, 13 and the lead wires 15, 15 to each other. The protective layer 3 includes an inner protective layer 20 as a protective layer that covers the heat sensitive body 11 along with portions of the lead wires 15, 15, and an outer protective layer 30 that covers the outer side of the inner protective layer 20.

By including a configuration characteristic of the inner protective layer 20, the temperature sensor element 1 can maintain a low rate of change in the electrical resistance value even in an atmosphere containing hydrogen.

The temperature sensor element 1 may be used by being housed inside a protective tube made of metal that has excellent resistance to heat and oxidation, such as stainless steel or an Ni-based superalloy, while the specifics will not be described here.

In the following, each component of the temperature sensor element 1 will be described, and then the workings and effects of the temperature sensor element 1 will be described.

### [Heat sensitive body 11]

As the heat sensitive body 11, a thermistor sintered body is used. "Thermistor" is an abbreviation for "thermally sensitive resistor," and is a metal oxide that measures temperature using the resistance value changing with temperature.

Thermistors are divided into two types, negative temperature coefficient (NTC) thermistors and positive temperature coefficient (PTC) thermistors, and the present invention can be used for either type of thermistor.

An oxide sintered body composed basically of manganese oxide (Mn₃O₄) having a spinel structure, which is typical for an NTC thermistor, can be used as the heat sensitive body 11. An oxide sintered body having a composition of MxMn₃₋ₓO₄ obtained by adding an M element (one or two or more of among Ni, Co, Fe, Cu, Al, and Cr) to this basic composition can be used as the heat sensitive body 11. Further, one or two or more of V, B, Ba, Bi, Ca, La, Sb, Sr, Ti, and Zr can be added.

A composite oxide having a perovskite structure, which is typical for an NTC thermistor, for example, an oxide sintered body composed basically of YCrO₃ can be used as the heat sensitive body 11.

As the most typical NTC thermistor, a sintered body can be named which includes a Y₂O₃ phase and a Y(Cr, Mn)O₃ phase, and of which the chemical composition of Cr, Mn, Ca, and Y except for oxygen is Cr: 3 to 9 mol%, Mn: 5 to 15 mol%, Ca: 1 to 8 mol%, with the balance being inevitable impurities and Y.

### [Manufacturing Method of Thermistor Sintered Body]

The heat sensitive body 11 formed of a thermistor sintered body is manufactured by going through the processes of weighing raw material powders, mixing the raw material powders, drying and calcining the raw material powders, and mixing and pulverizing after calcination, drying and granulating, and compacting and sintering. In the following, each process will be described using the above-described most typical thermistor sintered body as an example.

### [Weighing Raw Material Powders]

Raw material powders including an Yttrium oxide (Y₂O₃) powder, a chrome oxide (Cr₂O₃) powder, a manganese oxide (MnO, Mn₂O₃, Mn₃O₄, etc.) powder, and a calcium carbonate (CaCO₃) powder are weighed to form the aforementioned chemical composition.

In this embodiment, a powder is formed of multiple particles.

The Y₂O₃ powder contributes to formation of the Y₂O₃ phase, and the Y₂O₃ powder, the Cr₂O₃ powder, and the manganese oxide powder (Mn₃O₄ powder) contribute to formation of the Y(Cr, Mn)O₃ phase. In addition to functioning as a sintering aid, the CaCO₃ powder contributes to lowering the B-constant. The B-constant is a physical property value representing the sensitivity (the ratio of change in the resistance value) of the thermistor relative to temperature changes.

To obtain a thermistor sintered body with stable characteristics, powders with a purity of 98% or higher, preferably 99% or higher, and more preferably 99.9% or higher are used as the raw material powders.

The particle size of the raw material powder is not limited as long as calcination proceeds, but can be selected within a range of 0.1 to 6.0 µm in terms of the average particle size (d50).

### [Mixing Raw Material Powders; Ball Mill]

The Y₂O₃ powder, the Cr₂O₃ powder, the Mn₃O₄ powder, and the CaCO₃ powder having been weighed to the predetermined amounts are mixed together. The mixing can be performed, for example, by a procedure of converting the mixed powder into a slurry state by addition of water, and mixing the slurry by a ball mill. For the mixture, a mixer other than a ball mill can also be used.

### [Drying Raw Material Powders]

It is preferable that the slurry having been mixed be dried and granulated by a spray dryer or other device into a powder mixture for calcination.

### [Calcination]

The powder mixture for calcination having been dried is calcined. By the calcination, a calcined body having a composite structure of the Y₂O₃ phase and the Y(Cr, Mn)O₃ phase is obtained from the Y₂O₃ powder, the Cr₂O₃ powder, the Mn₃O₄ powder, and the CaCO₃ powder.

The calcination is performed by feeding the powder mixture for calcination into a crucible, for example, and holding the powder mixture within a temperature range of 800 to 1300°C in the air. If the temperature of calcination is lower than 800°C, the formation of the composite structure is insufficient, and if the temperature of calcination exceeds 1300°C, there is a possibility that the sintering density decreases and the stability of the resistance value decreases. Therefore, the holding temperature for calcination should be set within the range of 800 to 1300°C.

The holding time period in the calcination should be appropriately set according to the holding temperature, but when the holding temperature is in the aforementioned temperature range, the purpose of the calcination can be achieved by a holding time period of about 0.5 to 100 hours.

### [Mixing and Pulverizing; Ball Mill]

The powder after the calcination is mixed and pulverized. The mixture and pulverization can be performed by a procedure of converting the powder after the calcination into a slurry state by addition of water, and mixing the slurry by a ball mill, in the same manner as in the procedure before the calcination.

### [Drying and Granulation]

It is preferable that the powder having been pulverized be dried and granulated by a spray dryer or other device.

### [Compacting]

The granulated powder after the calcination is compacted into a predetermined shape.

For compacting, press compacting with the use of a die, and besides a cold isostatic press (CIP) can be used.

The higher the density of the compacted body is, the higher density of a sintered body easily obtains; and accordingly, it is desirable to enhance the density of the compacted body as much as possible. For that purpose, it is preferable to use CIP which can obtain the high density.

### [Sintering]

Next, the obtained compacted body is sintered.

The sintering is performed by a procedure of holding the temperature range of 1400 to 1650°C in the air. If the sintering temperature is lower than 1400°C, the formation of the composite structure is insufficient; and if the sintering temperature exceeds 1650°C, the sintered body melts, and/or a reaction occurs with a sintering crucible and/or the like. The holding time period in the sintering should be appropriately set according to the holding temperature, but when the holding temperature is in the above temperature range, a dense sintered body can be obtained by a holding time period of approximately 0.5 to 200 hours.

It is preferable to subject the obtained thermistor sintered body to annealing, in order to stabilize the characteristics of the thermistor. The thermistor sintered body is annealed by being held, for example, at 1000°C in the air.

### [Electrodes 13, 13 and Connection Electrodes 17, 17]

As shown in FIG. 1, the electrodes 13, 13 are respectively formed into a film shape on the whole areas of both top and bottom surfaces of the plate-shaped heat sensitive body 11. The electrodes 13, 13 are formed from platinum (Pt) or other noble metal.

The electrodes 13, 13 are each formed as a thick film or a thin film. The thick film electrodes 13, 13 are formed by applying a paste which has been produced by mixing an organic binder with a platinum powder onto both of the top and bottom surfaces of the thermistor sintered body, and by drying and then sintering the paste. Thin film electrodes can be formed by vacuum vapor deposition or sputtering.

The heat sensitive body 11 with the electrodes 13, 13 formed thereon is processed into a predetermined dimension.

The connection electrodes 17, 17 are formed of metal films that are formed on the surfaces of the respective electrodes 13, 13. The connection electrodes 17, 17 are also formed from platinum (Pt) or other noble metal.

### [Lead Wires 15, 15]

As shown in FIG. 1, one end sides of the lead wires 15, 15 are electrically and mechanically connected to the electrodes 13, 13 through the connection electrodes 17,17, respectively. The other end sides of the lead wires 15, 15 are connected to an external detection circuit. The lead wires 15, 15 are formed of a heat-resistant wire material formed from, for example, platinum or an alloy of platinum and iridium (Ir).

The lead wires 15, 15 are connected to the electrodes 13, 13, in the following way.

A paste containing a platinum powder which will form the connection electrodes 17, 17 is applied in advance to each of one end sides of the lead wires 15, 15. The platinum paste is dried in a state where the respective sides of the lead wires 15, 15, on which the platinum paste has been applied, are brought into contact with the electrodes 13, 13, and then the platinum powder is sintered.

### [Inner Protective Layer 20]

Next, the inner protective layer 20 that is a feature of the embodiment will be described.

The main function of the inner protective layer 20 is to serve as a buffer material that relieves stress caused by thermal expansion of the outer protective layer 30 from being directly applied to the heat sensitive body 11. In other words, the inner protective layer 20 bears thermal stress from the outer protective layer 30.

Further, the inner protective layer 20 functions to realize stable electrical and mechanical connection by fixing joints between the heat sensitive body 11 and the lead wires 15, 15.

The inner protective layer 20 according to the embodiment is formed of an aggregate of particles. This aggregate does not contain glass that is contained in conventional inner protective layers, which enhances the function of bearing thermal stress. However, the inner protective layer 20 according to the embodiment is different from conventional inner protective layers containing glass in its thermal stress bearing effect. Specifically, an inner protective layer containing glass bears thermal stress by securing its rigidity, whereas the inner protective layer 20 according to the embodiment bears thermal stress as the particles forming the aggregate undergo positional shift relatively to one another.

The particles forming the aggregate in the inner protective layer 20 preferably meet the following conditions. Condition 1: Being chemically stable with respect to the heat sensitive body 11.

The particles forming the aggregate are required to be chemically stable with respect to the heat sensitive body 11 (e.g., a thermistor sintered body). This is to maintain the desired characteristics of the heat sensitive body 11. Being chemically stable is required especially when the inner protective layer 20 is heated to a high temperature in a sintering process for forming the outer protective layer 30. It is required also when the temperature sensor element 1 actually measures high temperatures like over 1000°C.

Condition 2: Being made of a non-metal material.

The inner protective layer 20 as an aggregate of particles comes into direct contact with the heat sensitive body 11. If this aggregate is made of a metal material having electrical conductivity, it causes a leak of electricity on contact with the electrodes 13, 13 of the heat sensitive body 11 and the lead wires, thereby making temperature measurement impossible.

As suitable materials meeting these Condition 1 and Condition 2, oxides, carbides, nitrides, and borides of metallic elements and metalloid elements can be named.

Metallic elements are a concept specifically including alkali metal elements, alkaline earth metal elements, transition metal elements, base metal elements, and lanthanoid elements. Among these elements, preferred elements are as follows:
Mg, Al, Si, Ti, Cr, Mn, Fe, Co, Ni, Zn, Ge, Sr, Y, Zr, Nb, Mo, Ce, Pr, Nd, Sm, Eu, Gd, Tb, Er, Yb, Lu, Hf, Ta, W.

As suitable materials other than oxides, carbides, nitrides, and borides that meet the above Condition 1 and Condition 2, organic substances, for example, resin materials can also be named. However, in the case of an organic substance, since the melting point is low compared with that of a metal element, an oxide of a metalloid element, or the like, using an organic substance as the inner protective layer 20 puts a limit on the range of temperatures measured by the temperature sensor element 1.

Containing no glass, the inner protective layer 20 has difficulty maintaining its shape by itself; therefore, the outer protective layer 30 solely assumes the role of maintaining the shape. Specifically, the outer protective layer 30 is formed around the inner protective layer 20, and in a state where no external force is applied, the outer protective layer 30 holds the inner protective layer 20, thereby allowing the inner protective layer 20 to maintain its shape without containing glass.

Further, at some part, particles forming the inner protective layer 20 are joined together as elements are diffused between adjacent particles during sintering of the outer protective layer 30, which can contribute to maintaining the inner protective layer 20 along with holding by the outer protective layer 30. However, this joint between adjacent particles need not be firm. Rather, it is preferable that the joint between adjacent particles be weak from the viewpoint of the stress relieving effect of the inner protective layer 20. Diffusion of elements between adjacent particles occurs during heat treatment of the outer protective layer 30.

Compared with the thermistor sintered body forming the heat sensitive body 11, the inner protective layer 20 containing no glass has a low density of about equal to or less than 60% of that of the thermistor sintered body. Further, compared with the thermistor sintered body, it has a higher resistance value than the thermistor sintered body.

Since the inner protective layer 20 is formed of an aggregate of particles, its coarseness or denseness can be evaluated as a filling rate. When densest filling is assumed as a reference, the filling rate of particles in the inner protective layer 20 is about 88% at a maximum.

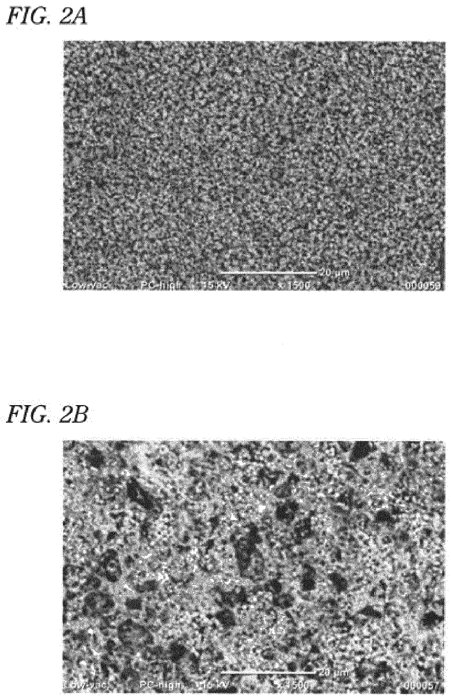

Here, FIG. 2A shows a photograph of the microstructure of the inner protective layer according to the embodiment that does not contain glass, and FIG. 2B shows a photograph of the microstructure of a conventional inner protective layer that contains glass. FIG. 2A corresponds to Example (specimen No. 1) to be described later, and FIG. 2B corresponds to a conventional example (specimen No. 8) to be described later.

Since the inner protective layer according to the embodiment of FIG. 2A that does not contain glass is not sintered, the density thereof is low compared with that of the sintered body forming the heat sensitive body 11.

On the other hand, an inner protective layer containing glass undergoes a process of solidification after the glass is melted, which provides it with the strength to fix the heat sensitive body (11) and the lead wires (15, 15). An inner protective layer containing glass has a fixing force in proportion to the content of glass. Thus, an external force is more likely to be transmitted, and when used at high temperature, the heat sensitive body is subjected to relatively high thermal stress from an internal force based on the difference in the coefficient of linear expansion between the members.

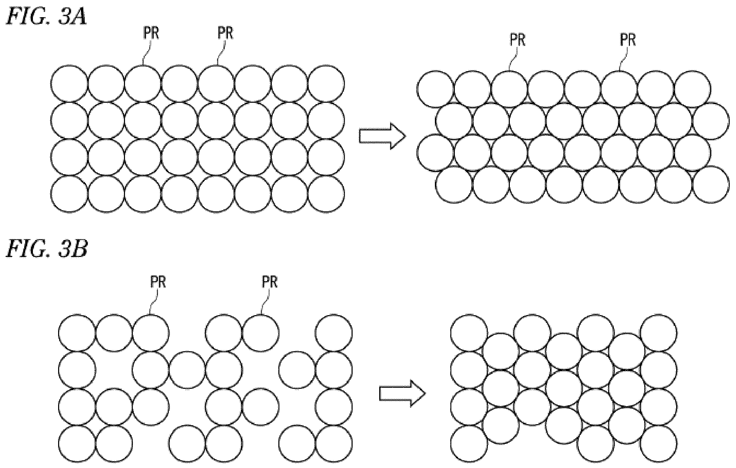

In the inner protective layer 20 according to the embodiment, as it is an aggregate of particles, when subjected to stress resulting from thermal expansion of the outer protective layer 30, adjacent particles PR can undergo positional shift relatively to one another as shown in FIG. 3A, which can relieve the stress applied.

The inner protective layer 20 containing no glass has a low density of equal to or less than 60% or that of the thermistor sintered body. The low-density inner protective layer 20 is preferable for relieving the stress resulting from thermal expansion of the outer protective layer 30. That is, as shown in FIG. 3B, having a low density means having a wide margin for shrinking when subjected to stress. Accordingly, when subjected to stress from the outer protective layer 30, the inner protective layer 20 can relieve more stress by shrinking as a whole.

### [Outer Protective Layer 30]

Next, the outer protective layer 30 will be described.

The outer protective layer 30 functions to airtightly seal the heat sensitive body 11 and the inner protective layer 20 from the surrounding atmosphere. Further, the outer protective layer 30 functions to hold the form of the inner protective layer 20 in which particles are not joined together or joined together only with low joining force. In addition, the outer protective layer 30 functions to protect the heat sensitive body 11 along with the inner protective layer 20 from external force.

The outer protective layer 30 is preferably formed of the same mixture of glass and an oxide powder as the inner protective layer 20. As the oxide powder, aluminum oxide (Al₂O₃), magnesium oxide (MgO), yttrium oxide (Y₂O₃), chrome oxide (Cr₂O₃), zirconium oxide (ZrO₂), or a powder having the same composition as that of the thermistor sintered body forming the heat sensitive body 11 can be used.

While one or both of crystallized glass and amorphous glass can be used as the glass forming the outer protective layer 30, it is preferable that crystallized glass that is stable at high temperatures be used. As crystallized glass, for example, a composition of SiO₂: 30 to 60% by weight, CaO: 10 to 30% by weight, MgO: 5 to 25% by weight, and Al₂O₃: 0 to 15% by weight can be used.

Also for the outer protective layer 30, as with the inner protective layer 20, an organic substance, for example, a thermosetting resin, such as an epoxy resin, can be used.

### [Relationship of Rate of Linear Expansion]

The temperature sensor element 1 in the embodiment may be used, for example, in a range of temperatures from room temperature to 1000°C.

Then, in this temperature range, thermal stress that occurs between the heat sensitive body 11 and the inner protective layer 20 that directly covers the heat sensitive body 11 needs to be suppressed. This is to suppress changes in the electrical characteristics, particularly the resistance value, of the heat sensitive body 11.

Further, in this temperature range, it is required to suppress formation of a gap between the outer protective layer 30 that covers the inner protective layer 20 and seals the lead wires 15, 15, and the lead wires 15, 15. This is to prevent a reducing gas and other corrosive gases from penetrating to the heat sensitive body 11 and thereby prevent changes in the electrical characteristics, particularly the resistance value, of the heat sensitive body 11. The other corrosive gases refer to hydrogen sulfide, sulfurous acid, nitrous acid, chlorine, ammonia, etc.

To meet these requirements, it is necessary to adjust the coefficients of linear expansion of the heat sensitive body 11, the lead wires 15, 15, and the outer protective layer 30 that constitute parts of the temperature sensor element 1. That is, it is desirable that the coefficient of linear expansion (α30) of the outer protective layer 30 be made higher than the coefficient of linear expansion (α11) of the heat sensitive body 11 and be made close to the coefficient of linear expansion (α15) of the lead wire 15. Specifically, the difference between the coefficient of linear expansion α30 and the coefficient of linear expansion α15 is adjusted to preferably 5 × 10⁻⁷/K or less, and more preferably 3 × 10⁻⁷/K or less.

The coefficients of linear expansion of the above-described thermistor sintered body forming the heat sensitive body 11, platinum, for example, forming the lead wire 15, glass, and oxides are as shown below. It is desired that the ratio between the glass and the oxide powder in the outer protective layer 30 be set based on these values. It is also desired that the ratio between the glass and the oxide powder be set such that the outer protective layer 30 approaches the coefficient of linear expansion α15 of the lead wire 15.
Heat sensitive body 11 (thermistor sintered body): 8.0 × 10⁻⁶/K
Lead wire 15 (platinum): 8.8 × 10⁻⁶/K
Glass: 9.1 × 10⁻⁶/K
Y₂O₃, Al₂O₃: 7.2 × 10⁻⁶/K
CaO, MgO, ZrO₂: 10.5 × 10⁻⁶/K

### [Manufacturing Method of Temperature Sensor Element 1]

Next, a manufacturing method of the temperature sensor element 1 will be described.

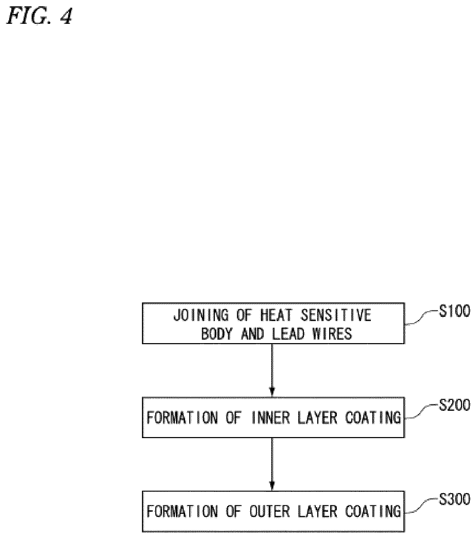

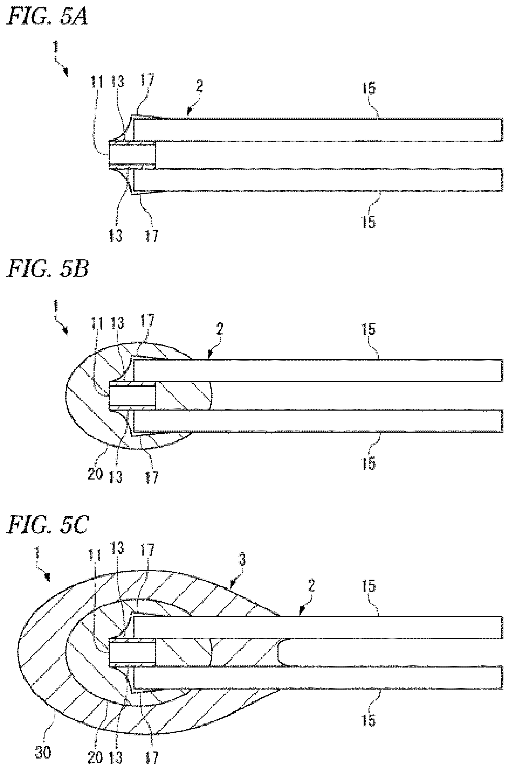

As shown in FIG. 4, FIG. 5A, FIG. 5B and FIG. 5C, the temperature sensor element 1 is manufactured by going through a step of manufacturing the element main body 2 (S100 of FIG. 4, FIG. 5A), a step of forming the inner protective layer 20 on the manufactured element main body 2 (S200 of FIG. 4, FIG. 5B), and a step of forming the outer protective layer 30 over the inner protective layer 20 (S300 of FIG. 4, FIG. 5C).

### [Inner Layer Formation Step (S200)]

The step of forming the inner protective layer 20 (S200) includes a step of forming a layer to constitute an inner layer by dipping, and a step of drying the formed layer.

For dipping, a liquid mixture for the inner protective layer including the above-described various powders, a binder powder, and a solvent is prepared.

Next, the element main body 2 is immersed in this liquid mixture from the side of the heat sensitive body 11 to which the lead wires 15, 15 are connected, to deposit a precursor, which later forms the inner protective layer 20, around the heat sensitive body 11.

When it is difficult to obtain a precursor having a required thickness and state by one dipping, dipping can be performed multiple times to obtain a precursor of the inner protective layer 20.

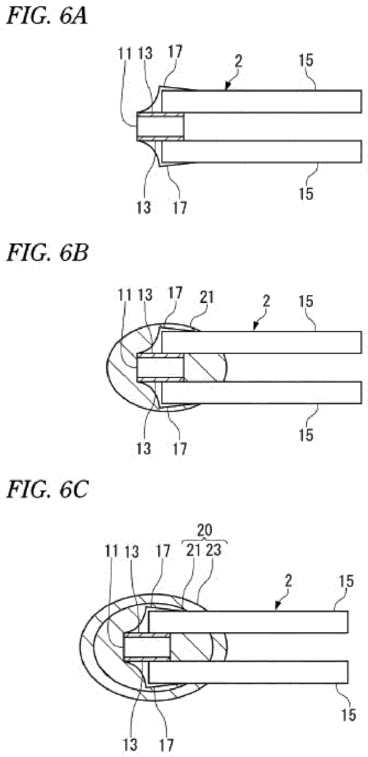

For example, FIGS. 6A, 6B, and 6C show an example of forming a precursor by performing dipping twice. By the first dipping, a first precursor layer 21 is formed (FIG. 6B), and thereafter, by the second dipping, a second precursor layer 23 is formed (FIG. 6C). One dipping can be sufficient for forming the inner protective layer 20, or dipping can also be performed three or more times.

After dipping, when the solvent is vaporized and drying is completed, a precursor of the inner protective layer 20 in which particles forming the inner protective layer 20 are bound together by the binder can be obtained. When the inner protective layer precursor is obtained, next, the process flow moves to the outer protective layer formation step (S300).

### [Outer Layer Formation Step (S300)]

The step of forming the outer protective layer 30 (S300) includes a step of forming a precursor of the outer protective layer 30 by dipping, and a step of performing heat treatment on the outer layer precursor.

For dipping, a liquid mixture for the outer protective layer 30 including the above-described various powders, a binder powder, and a solvent is prepared. When the outer protective layer 30 includes glass only, a liquid mixture including a glass powder, a binder powder, and a solvent is prepared.

Next, the element main body 2 is immersed in this liquid mixture from the side of the inner protective layer 20 to deposit a precursor of the outer protective layer 30 around the inner protective layer 20.

Also for the outer protective layer 30, as with the inner protective layer 20, a precursor of the outer protective layer 30 can be formed by performing dipping once, or this precursor can also be formed by performing dipping multiple times.

After the precursor of the outer protective layer 30 is dried, crystallization and baking of the glass are performed at the same time by performing heat treatment at 1200°C, for example.

By going through each of the above processes, the temperature sensor element 1 having the inner protective layer 20 and the outer protective layer 30 can be obtained.

### [First Example]

Next, one example of the present invention will be described based on a specific example of implementation.

Temperature sensor elements 1 each including an inner protective layer 20 and an outer protective layer 30 to be described below were produced and the rates of change in the resistance value were measured. The results are collectively shown in Table 1.

Raw material powders having the following particle sizes (d50) were mixed at the ratio shown below to prepare powder raw materials, and the heat sensitive bodies 11 were manufactured in accordance with the processes described above. The conditions for calcination were 1300°C × 24 hours and those for sintering were 1500°C × 24 hours, and both were performed in the air.
Y₂O₃: 79.5 mol%, particle size: 0.1 µm
Cr₂O₃: 8.5 mol%, particle size: 2.0 µm
CaCO₃: 3.5 mol%, particle size: 2.0 µm
Mn₃O₄: 8.5 mol%, particle size: 5.0 µm

The electrode 13, the lead wire 15, and the connection electrode 17 were all formed from platinum (Pt), and the element main bodies 2 were produced by the procedure described in the embodiment.

The inner protective layers 20 and the outer protective layers 30 shown in Table 1 were sequentially formed on these element main bodies 2.

Each inner protective layer 20 is formed by dipping the heat sensitive body 11 of the element main body 2 once in a liquid mixture formed of a mixture of the various powders having the coefficients of linear expansion and the particle sizes (d50) shown below and an organic binder, and then drying the heat sensitive body 11. The inner protective layers 20 include a thermistor powder alone; a mixture of the thermistor powder and a Y₂O₃ powder; a mixture of the thermistor powder and an MgO powder; and a mixture of the thermistor powder and a ZrO powder. The thermistor powder has the same composition as the thermistor forming the heat sensitive body 11.

Glass: 9.1 × 10⁻⁶/K
Thermistor powder: 8.0 × 10⁻⁶/K, 1.0 µm
Y₂O₃ powder: 7.2 × 10⁻⁶/K, 0.1 µm
MgO powder: 11 × 10⁻⁶/K, 10 µm
ZrO₂ powder: 10.5 × 10⁻⁶/K, 5 µm

The outer protective layers 30 were formed of a mixture of a Y₂O₃ powder as an oxide powder and glass, or formed of glass alone. As the glass, crystallized glass was used.

Using the above-described element main bodies 10, the liquid mixtures for the inner protective layers 20, and the liquid mixtures for the outer protective layers 30, 14 types of temperature sensor elements (Example: specimens No. 1 to 14) shown in Table 1 were obtained. Using the obtained temperature sensor elements (specimens No. 1 to 14), the rates of change (ΔR25[%]) in the resistance value under the following conditions were measured.

The amount (mass%) of the thermistor powder added in the inner protective layers 20 of the specimens No. 3 to 10 is 50%, with the balance 50% being a Y₂O₃ powder, a ZrO₂ powder, an MgO powder, an Al₂O₃ powder, an SiO₂ powder, an RuO₂ powder, an AlN powder, and a BN powder, respectively.

The amount (mass%) of the glass added in the outer protective layers 30 of the specimens No. 1 and 3 to 14 is 80%, with the balance being a Y₂O₃ powder.

In the specimen No. 11, the density (ρ) of the inner protective layer 20 is about 5% higher than that of the specimen No. 1. In the specimen No. 12, the density of the inner protective layer 20 is about 10% lower than that of the specimen No. 1, and in the specimen No. 13, the density of the inner protective layer 20 is about 15% lower than that of the specimen No. 1. Further, in the specimen No. 14, the volume (V) of the inner protective layer 20 is about 30% higher than that of the specimen No. 1.

To compare with the temperature sensor elements according to Example, a specimen No. 15 (conventional example) of which the inner protective layer and the outer protective layer include a thermistor powder and glass was produced in accordance with Patent Literature 1 and Patent Literature 2, and the rate of change in the resistance value was measured in the same manner as in Example. The amounts (mass%) of the thermistor powder and the glass added are 80% and 20%, respectively.

The measurement result in the conventional example as well as the measurement results in Example are collectively shown in Table 1.

Holding temperature: 900°C
Atmosphere: Hydrogen 5 vol.% + nitrogen 95 vol.%
Holding time: 10 hours
Resistance value measurement: 25°C

**[Table 1]**

| Specimen No. | Inner protective layer 20 | Outer protective layer 30 | Δ R25 [%] after a lapse of 10 Hr. (900° C) | Classification |
|---|---|---|---|---|
| 1 | Thermistor | Glass + Y₂O₃ | 13.21 | |
| 2 | Thermistor | Glass | 12.98 | |
| 3 | Thermistor + Y₂O₃ | Glass + Y₂O₃ | 23.33 | |
| 4 | Thermistor + ZᵣO₂ | Glass + Y₂O₃ | 25.67 | |
| 5 | Thermistor + MgO | Glass + Y₂O₃ | 28.59 | |
| 6 | Thermistor + Al₂O₃ | Glass + Y₂O₃ | 46.35 | |
| 7 | Thermistor + SiO₂ | Glass + Y₂O₃ | 64.52 | Example |
| 8 | Thermistor + RuO₂ | Glass + Y₂O₃ | 13.41 | |
| 9 | Thermistor + AlN | Glass + Y₂O₃ | 57.05 | |
| 10 | Thermistor + BN | Glass + Y₂O₃ | 54.19 | |
| 11 | Thermi stor (*ρ* 5%up) | Glass + Y₂O₃ | 19.8 | |
| 12 | Thermistor (*ρ* 10%down) | Glass + Y₂O₃ | 2.60 | |
| 13 | Thermistor (*ρ* 15%down) | Glass + Y₂O₃ | 1.91 | |
| 14 | Thermistor (V 30%up) | Glass + Y₂O₃ | 5.20 | |
| 15 | Thermistor + Glass | Glass + Y₂O₃ | 77.05 | Conventional example |

As shown in Table 1, compared with the specimen No. 15 (conventional example) of which the inner protective layer 20 contains glass, the specimens No. 1 to 14 (Example) of which the inner protective layers 20 do not contain glass can maintain low rates of change in the resistance value.

As for the outer protective layer 30, as the result of the specimen No. 2 shows, a low rate of change in the resistance value can be maintained even when the outer protective layer 30 is formed from glass alone. This also suggests that the stress relieving function of the inner protective layer 20 is fulfilled regardless of the relationship among the coefficients of linear expansion of the heat sensitive body 11, the inner protective layer 20, and the outer protective layer 30.

### [Second Example]

Next, using the specimen No. 1 (Example) and the specimen No. 15, a temperature rise-and-fall cycle test involving repeating the cycle 1000 times and 2000 times was conducted to measure the rates of change (ΔR25[%]) in the resistance value. The results are shown in Table 2.

The outer protective layers 30 of the specimen No. 1 and the specimen No. 15 have the same composition, but the inner protective layers 20 thereof are different from each other in the composition as to whether glass is contained.

The rates of change (ΔR25[%]) in the resistance value in Table 2 show the rate of change in the resistance values before the start of the first rise and fall and after the 1000th temperature rise and fall (1000 cycles), and the rate of change in the resistance values before the start of the first rise and fall and after the 2000th temperature rise and fall (2000 cycles).

Raised and lowered temperatures, number of repetitions (cycles): 25°C to 1000°C, 1000 times and 2000 times
Atmosphere: air
Measurement of resistance value: measured at 25°C after 1000 times of rise and fall and after 2000 times of rise and fall

**[Table 2]**

| Specimen No. | Inner protective layer 20 | Outer protective layer 30 | ΔR25 [%] | | Remarks |
|---|---|---|---|---|---|
| | | | 1000 cycles | 2000 cycles | |
| 1 | Thermistor | Glass + Y₂O₃ | 3.81 | 2.97 | Example |
| 15 | Thermistor + glass | Glass + Y₂O₃ | 4.83 | 6.83 | Conventional example |

It has been confirmed from Table 2 that also in the cycle test, the rate of change in the resistance value of the specimen No. 1 (Example) of which the inner protective layer 20 does not contain glass is low. In particular, it is worth noting that the specimen No. 1 exhibits a lower rate of change in the resistance value as the number of cycles increases.

### [Third Example]

Next, using the specimen No. 1 (Example), the specimen No. 12 (Example), and the specimen No. 15 (conventional example), the rates of change (ΔR25[%]) in the resistance value were measured in the same manner as in First Example except for the holding temperature being 1050°C. The results are shown in Table 3.

**[Table 3]**

| Specimen No. | Inner protective layer 20 | Outer protective layer 30 | Δ R25 [%] after a lapse of 10 Hr. (1050° C) | Remarks |
|---|---|---|---|---|
| 1 | Thermistor | Glass + Y₂O₃ | 51.87 | Example |
| 12 | Thermistor (*ρ* 10%down) | Glass + Y₂O₃ | 15.70 | |
| 15 | Thermistor + Glass | Glass + Y₂O₃ | 426 | Conventional example |

Compared with the specimen No. 15 according to the conventional example, the specimen No. 1 and the specimen No. 12 according to Example can achieve dramatically lower rates of change in the resistance value at the holding temperature of 1050°C.

### Reference Signs List

- 1: Temperature sensor element
- 2: Element main body
- 3: Protective layer
- 11: Heat sensitive body
- 13: Electrode
- 15: Lead wire
- 17: Connection electrode
- 20: Inner protective layer
- 30: Outer protective layer

## Claims

1. A temperature sensor element (1) comprising:
a heat sensitive body (11) including a thermistor sintered body of which electrical characteristics change with temperature;
a pair of lead wires (15) connected to the heat sensitive body (11) through electrodes (13); and
a protective layer (3) covering the heat sensitive body (11),
wherein the protective layer (3) has an inner protective layer (20) covering the heat sensitive body (11) and an outer protective layer (30) covering an outer side of the inner protective layer (20),
**characterized in that** the inner protective layer (20) is formed of an aggregate of particles that are chemically stable with respect to the thermistor sintered body and made of non-metal.

2. The temperature sensor element (1) according to claim 1, wherein a filling rate of the particles in the inner protective layer (20) is 88% or less.

3. The temperature sensor element (1) according to claim 1 or 2, wherein the aggregate of the inner protective layer (20) includes one or two or more of oxide particles, carbide particles, nitride particles, and boride particles.

4. The temperature sensor element (1) according to any one of claims 1 to 3, wherein the particles forming the aggregate of the inner protective layer (20) are made from a material selected from carbides, nitrides and borides of metallic elements.

5. The temperature sensor element (1) according to any one of claims 1 to 4, wherein the aggregate of the inner protective layer (20) includes thermistor particles having the same composition as the thermistor sintered body.

6. The temperature sensor element (1) according to any one of claims 1 to 5, wherein the particles forming the aggregate undergo positional shift relatively to one another.

7. The temperature sensor element (1) according to any one of claims 1 to 6, wherein the inner protective layer (20) does not contain glass.

8. A manufacturing method of a temperature sensor element (1) including a heat sensitive body (11) including a thermistor sintered body of which electrical characteristics change with temperature, a pair of lead wires (15) connected to the heat sensitive body (11) through electrodes (13), and a protective layer (3) covering the heat sensitive body (11), the manufacturing method comprising:
a first step (S200) of providing an inner protective layer (20) that covers the heat sensitive body (11); and
a second step (S300) of providing an outer protective layer (30) that covers an outer side of the inner protective layer (20),
**characterized in that**, in the first step (S200), the inner protective layer (20) formed of an aggregate of particles that are chemically stable with respect to the thermistor sintered body and made of non-metal is provided.

9. The manufacturing method according to claim 8, wherein the particles forming the aggregate of the inner protective layer (20) are made from a material selected from carbides, nitrides and borides of metallic elements.

10. The manufacturing method according to claim 8 or 9, wherein the particles forming the aggregate undergo positional shift relatively to one another.

11. The manufacturing method according to any one of claims 8 to 10, wherein the inner protective layer (20) does not contain glass.

## Patentansprüche

1. Temperatursensorelement (1), umfassend:
einen wärmeempfindlichen Körper (11), der einen Thermistorsinterkörper enthält, dessen elektrische Eigenschaften sich mit der Temperatur ändern;
ein Paar Zuleitungsdrähte (15), die über Elektroden (13) mit dem wärmeempfindlichen Körper (11) verbunden sind; und
eine Schutzschicht (3), die den wärmeempfindlichen Körper (11) bedeckt, wobei die Schutzschicht (3) eine innere Schutzschicht (20), die den wärmeempfindlichen Körper (11) bedeckt, und eine äußere Schutzschicht (30) aufweist, die eine Außenseite der inneren Schutzschicht (20) bedeckt,
**dadurch gekennzeichnet, dass**
die innere Schutzschicht (20) aus einem Aggregat von Partikeln gebildet ist, die in Bezug auf den Thermistorsinterkörper chemisch stabil sind und aus Nichtmetall bestehen.

2. Temperatursensorelement (1) nach Anspruch 1, wobei ein Füllgrad der Partikel in der inneren Schutzschicht (20) 88 % oder weniger beträgt.

3. Temperatursensorelement (1) nach Anspruch 1 oder 2, wobei das Aggregat der inneren Schutzschicht (20) eines oder zwei oder mehr von Oxidpartikeln, Carbidpartikeln, Nitridpartikeln und Boridpartikeln enthält.

4. Temperatursensorelement (1) nach einem der Ansprüche 1 bis 3, wobei die Partikel, die das Aggregat der inneren Schutzschicht (20) bilden, aus einem Material hergestellt sind, das aus Carbiden, Nitriden und Boriden von metallischen Elementen ausgewählt ist.

5. Temperatursensorelement (1) nach einem der Ansprüche 1 bis 4, wobei das Aggregat der inneren Schutzschicht (20) Thermistorpartikel mit der gleichen Zusammensetzung wie der Thermistorsinterkörper enthält.

6. Temperatursensorelement (1) nach einem der Ansprüche 1 bis 5, wobei die Partikel, die das Aggregat bilden, eine Positionsverschiebung relativ zueinander erfahren.

7. Temperatursensorelement (1) nach einem der Ansprüche 1 bis 6, wobei die innere Schutzschicht (20) kein Glas enthält.

8. Herstellungsverfahren für ein Temperatursensorelement (1), das einen wärmeempfindlichen Körper (11), der einen Thermistorsinterkörper enthält, dessen elektrische Eigenschaften sich mit der Temperatur ändern, ein Paar Zuleitungsdrähte (15), die über Elektroden (13) mit dem wärmeempfindlichen Körper (11) verbunden sind, und eine Schutzschicht (3) aufweist, die den wärmeempfindlichen Körper (11) bedeckt, wobei das Herstellungsverfahren umfasst:
einen ersten Schritt (S200) des Bereitstellens einer inneren Schutzschicht (20), die den wärmeempfindlichen Körper (11) bedeckt; und
einen zweiten Schritt (S300) des Bereitstellens einer äußeren Schutzschicht (30), die eine Außenseite der inneren Schutzschicht (20) bedeckt,
**dadurch gekennzeichnet, dass**
im ersten Schritt (S200) die innere Schutzschicht (20) bereitgestellt wird, die aus einem Aggregat von Partikeln gebildet ist, die in Bezug auf den Thermistorsinterkörper chemisch stabil sind und aus Nichtmetall bestehen.

9. Herstellungsverfahren nach Anspruch 8, wobei die Partikel, die das Aggregat der inneren Schutzschicht (20) bilden, aus einem Material hergestellt sind, das aus Carbiden, Nitriden und Boriden von metallischen Elementen ausgewählt ist.

10. Herstellungsverfahren nach Anspruch 8 oder 9, wobei die Partikel, die das Aggregat bilden, eine Positionsverschiebung relativ zueinander erfahren.

11. Herstellungsverfahren nach einem der Ansprüche 8 bis 10, wobei die innere Schutzschicht (20) kein Glas enthält.

## Revendications

1. Élément de capteur de température (1) comprenant :
un corps thermosensible (11) comprenant un corps fritté de thermistance dont les caractéristiques électriques changent avec la température ; une paire de fils conducteurs (15) connectés au corps thermosensible (11) par l'intermédiaire d'électrodes (13) ; et
une couche de protection (3) recouvrant le corps thermosensible (11), dans lequel la couche de protection (3) comporte une couche de protection interne (20) recouvrant le corps thermosensible (11) et une couche de protection externe (30) recouvrant un côté externe de la couche de protection interne (20),
**caractérisé en ce que**
la couche de protection interne (20) est formée d'un agrégat de particules qui sont chimiquement stables par rapport au corps fritté de thermistance et constituées de non-métal.

2. Élément de capteur de température (1) selon la revendication 1, dans lequel un taux de remplissage des particules dans la couche de protection interne (20) est de 88 % ou moins.

3. Élément de capteur de température (1) selon la revendication 1 ou 2, dans lequel l'agrégat de la couche de protection interne (20) comprend une ou deux ou plus parmi des particules d'oxyde, des particules de carbure, des particules de nitrure et des particules de borure.

4. Élément de capteur de température (1) selon l'une quelconque des revendications 1 à 3, dans lequel les particules formant l'agrégat de la couche de protection interne (20) sont constituées d'un matériau choisi parmi les carbures, les nitrures et les borures d'éléments métalliques.

5. Élément de capteur de température (1) selon l'une quelconque des revendications 1 à 4, dans lequel l'agrégat de la couche de protection interne (20) comprend des particules de thermistance ayant la même composition que le corps fritté de thermistance.

6. Élément de capteur de température (1) selon l'une quelconque des revendications 1 à 5, dans lequel les particules formant l'agrégat subissent un déplacement de position les unes par rapport aux autres.

7. Élément de capteur de température (1) selon l'une quelconque des revendications 1 à 6, dans lequel la couche de protection interne (20) ne contient pas de verre.

8. Procédé de fabrication d'un élément de capteur de température (1) comprenant un corps thermosensible (11) comprenant un corps fritté de thermistance dont les caractéristiques électriques changent avec la température, une paire de fils conducteurs (15) connectés au corps thermosensible (11) par l'intermédiaire d'électrodes (13), et une couche de protection (3) recouvrant le corps thermosensible (11), le procédé de fabrication comprenant :
une première étape (S200) consistant à fournir une couche de protection interne (20) qui recouvre le corps thermosensible (11) ; et
une seconde étape (S300) consistant à fournir une couche de protection externe (30) qui recouvre un côté externe de la couche de protection interne (20),
**caractérisé en ce que**,
dans la première étape (S200), la couche de protection interne (20) formée d'un agrégat de particules qui sont chimiquement stables par rapport au corps fritté de thermistance et constituées de non-métal est fournie.

9. Procédé de fabrication selon la revendication 8, dans lequel les particules formant l'agrégat de la couche de protection interne (20) sont constituées d'un matériau choisi parmi les carbures, les nitrures et les borures d'éléments métalliques.

10. Procédé de fabrication selon la revendication 8 ou 9, dans lequel les particules formant l'agrégat subissent un déplacement de position les unes par rapport aux autres.

11. Procédé de fabrication selon l'une quelconque des revendications 8 à 10, dans lequel la couche de protection interne (20) ne contient pas de verre.
